# EUROPEAN PATENT APPLICATION

(11) **EP 1 574 140 A1**
(43) Date of publication of application: **14.09.2005**
(21) Application number: 04254833.9
(22) Date of filing: 11.08.2004
(51) Int. Cl.: A23L 1/217, A23L 1/18

(54) **Method for manufacturing snacks**

(30) Priority: 08.03.2004 JP 2004063905
(71) Applicant: Watanabe, Isao, Oita (JP)
(72) Inventor: Watanabe, Isao, Oita (JP)
(74) Representative: Jones, Helen M.M.

(57) **Abstract**

A method for manufacturing snacks that can achieve crispy eating sensation similar to that of conventional snacks without deep-frying which involves the steps of molding the material into a desired thickness, size and shape and hot air irradiating the molded material.

## Description

The present invention relates to a method for manufacturing snacks which can be manufactured without adding any oil other than the oil contained in the material itself.

As an example of snacks that have been frequently eaten hitherto, a potato chip can be mentioned, which is popularly accepted with its distinctive crunch. This potato chip can be not only handily eaten but also is available at an inexpensive price and is one of the snacks, which are most popularly eaten worldwide.

This kind of potato chip is prepared by thinly slicing potatoes, the material, deep-frying in oil, and seasoning by salts and other flavors.

However, snacks manufactured by the above-mentioned conventional method, in particular, the potato chip has a problem that it has inevitably high calorie content because it must undergo the process of deep-frying in oil in order to obtain that crispy eating sensation.

This problem indicates that the same request is leveled at snacks, too, in the recent trends of people's preference for low-calories with the food calorie suppressed to the lowest possible for antiobesity or for prevention of adult diseases.

Therefore, it is assumed to manufacture snacks without deep-frying material in oil, but if snacks are manufactured without deep-frying, it becomes difficult to obtain the crispy eating sensation and there is a problem that the attractive quality original to snacks cannot be obtained.

The present invention is made to solve the above-mentioned problem and it is the first object of the present invention to provide a method for manufacturing snacks that can achieve crispy eating sensation similar to that of conventional snacks without deep-frying.

In addition, it is the second object of the present invention to provide a method for manufacturing snacks which have low calorie with the use of oil suppressed but with the tastes not impaired, and at the same time, snacks which are suited for prevention of obesity and adult diseases.

In order to solve the above-mentioned problem, a method for manufacturing snacks related to the present invention is characterized in that the method comprises the steps of (a) molding the material into a desired thickness, a desired size, and a desired shape, to give a molded material and (b) hot air irradiating the molded material with hot air.

In addition, in one embodiment of the present invention the hot air irradiating step involves irradiating the material placed on a specified conveying means with hot air.

In addition, in a further embodiment of the present invention the molding step involves rolling the material after processing the material into the form of pellets.

In addition, the molding step may involve punching the material into a sheet form (plate form) and adjusting to a desired thickness and converting the sheet-form material into a desired size and a desired shape.

In one embodiment of the present invention hot air is irradiated from a plurality of nozzles.

In this embodiment it is preferable that the plurality of nozzles are arranged in such a manner that the nozzles can irradiate either the top surface of the specified conveying means or the top surface and the bottom surface of the specified conveying means with the hot air.

Optionally, in a preferred embodiment of the present invention the moisture content of the material may be adjusted prior to step (a) by drying by the use of far infrared rays or electromagnetic waves after steaming or boiling.

In addition, the further steps of flavoring the material which is the product of step (b) with the desired flavors to give a seasoned material and baking the seasoned material may be included.

In a preferred flavouring step the material which is the product of step (b) is seasoned by atomizing seasonings.

In a further embodiment of the present invention the material used in the process is generated by pulverizing and then kneading any of vegetables, root vegetables, fish and seafood or butchers' meat or combinations of these.

According to the present invention, because the material containing the desired volume of moisture is expanded by irradiating with hot air after it is molded into the specified thickness, specified size, and specified shape, it is possible to manufacture snacks that do not contain any additional oil other than that originally contained in the material itself. This provides a crispy eating sensation and snacks which have less calories and fats and are effective in preventing obesity and adult diseases.

In addition, according to the present invention, it is possible to provide a method for manufacturing snacks which is simple and low in cost such that it is suited for commercial production.

Furthermore because in one embodiment of the present invention the seasoned pellets are finished by the use of a baking using infrared rays or electromagnetic waves, the whole pellets can be dried uniformly and in a short time such that the crispy eating sensation can be obtained uniformly without losing any of its distinctive crunchiness.
Fig. 1 is a flow chart indicating a method for manufacturing snacks according to the first embodiment of the present invention;
Fig. 2 is a flow chart indicating a method for manufacturing snacks according to the second embodiment of the present invention;
Fig. 3 is a conceptual drawing that indicates the first method of the hot air irradiation process; and
Fig. 4 is a conceptual drawing that indicates the second method of the hot air irradiation process.

Referring now to the attached drawings, methods for manufacturing snacks which are working examples of the present invention will be described in detail as follows. These examples are preferred embodiments of the present invention and are in no way intended to limit the scope.

### [Example 1]

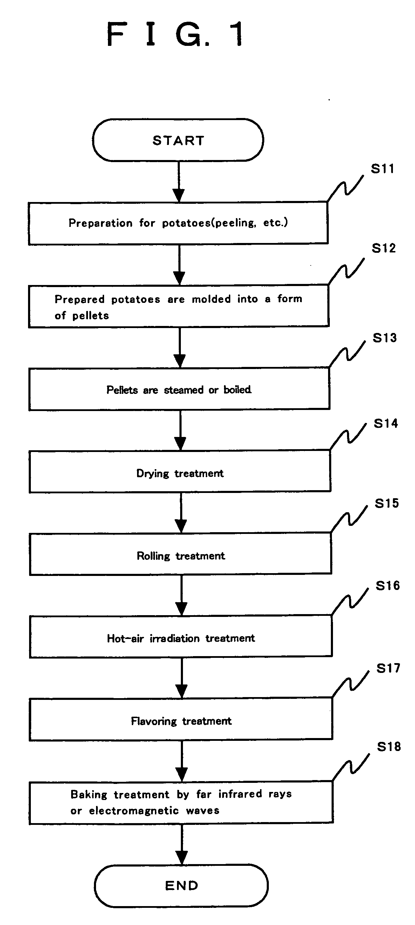

Fig. 1 is a flow chart that indicates a manufacturing process of snacks according to the first working example. First of all, potatoes are used for the material and peeled for preparation (Step S11).

In the present embodiment, potatoes are used for material but the present invention shall not always be limited to potatoes but any other tubers and roots may be used, and in addition, not only tubers and roots but also various foodstuff such as other culinary plants, fruits, fish and seafood, and butchers' meats can be used for material.

Furthermore, it is possible to crush and pulverize culinary vegetables, root vegetables, fish and seafood, butchers' meat, and others, add wheat flour, rice flour, starches, etc. as secondary material to them, and knead them to use for material. In such in event, is not always necessary to add the secondary material, but by adding this secondary material, it is possible to improve thickening of the material.

The potatoes prepared in Step S11 are molded into the form of pellets (Step S12). The pelletizing referred to herein means a treatment for cutting potatoes and shredding them into small pieces that measure 1 to 2 cm square. Specifically, after peeling potatoes, the peeled potatoes are sliced into a specified size and thickness (for example, the size is 2 cm² and thickness is about 4 mm) and are molded into a form of pellets.

The potatoes are not necessarily made into pellets. In the event that the material itself is of small pieces (thin lumps), the relevant material may be used as it is and pelletizaton is not necessary.

After steaming or boiling each pellet thinly cut in Step S12 (Step S13), a drying step is included so that each pellet achieves a desired moisture content (Step S14).

The drying step in Step S14 involves the use of infrared rays or electromagnetic waves so that the pellet moisture content is adjusted to a value in the range from 5-20%, and the pellets can be dried not only in a short time but also homogeneously from the pellet center portion to the end portion. By employing such a drying step, crunchiness can be obtained uniformly throughout the whole pellets.

Each pellet which is dried to have uniform moisture content in Step S14 may then be is rolled by a roller press for rolling (Step S15).

The pellet rolled in Step S15 is transferred to a hot-air irradiation step by a conveying means such as a belt conveyor, etc. and is irradiated with hot air (Step S16). Hot-air irradiation in this step is carried out by high-temperature hot air irradiated preferably from a plurality of nozzles and is carried out to expand each pellet conveyed. The detail of the hot-air irradiation process will be later described.

When the pellet is irradiated with hot air in Step S16 the moisture present on the relevant pellet surface is dried while at the same time, the moisture contained within the pellet (the fibers and cells when a potato is used for the material) is vaporized to become steam and is swollen (expanded) by the pressure which escapes to the outside (pellet surface direction). In such an event a large amount of fibers and cell membranes expanded by the steam remain as air bubbles within the pellet. It is the presence of these air bubbles which means that the original form of snacks which have a crispy eating sensation can be obtained.

Next, seasonings such as salt, glutamic acid, various extracts (for example, beef extract), and others may be sprayed by a non-oil spray onto the pellet expanded in Step S16 (hereinafter called the "snacks") for flavoring (Step S17). In the flavouring step, flavoring may be carried out by atomizing the polysaccharide thickening agent over the surface of the expanded pellet, but preferably by the use of a rotary tumbler, the treatment is carried out by constantly rotating the atomizing means so that the seasonings are homogeneously atomized over each pellet.

By using a non-oil spray, it is possible to manufacture snacks with the oil content contained in the material itself, but if a milder flavor is preferred, flavoring treatment by the use of a spray with a small amount of oil added may be carried out.

In addition, after the flavouring step in order to allow infiltration of the seasonings atomized over the individual snack surfaces the snacks may be temporarily cooled at room temperature prior to baking.

The snacks obtained as described above may be baked by the use of infrared rays or electromagnetic waves again (Step S18). This baking step is carried out to remove excess remaining moisture content and to achieve a final moisture content preferably in the range from 2-10% moisture content. By baking the snacks uniformly from the surface to the inside by this treatment, it is possible to manufacture snacks with still more crispy eating sensation, savoriness, and spiciness.

The snacks manufactured as described above go through a screening process (picking process) for equalizing the size and shape variations and are weighed into a volume delivered and packaged into one packing pouch by a weighing process. The snacks divided into weighed volume are delivered into packing pouches, then, packed into carton boxes, and distributed to the market.

### [Example 2]

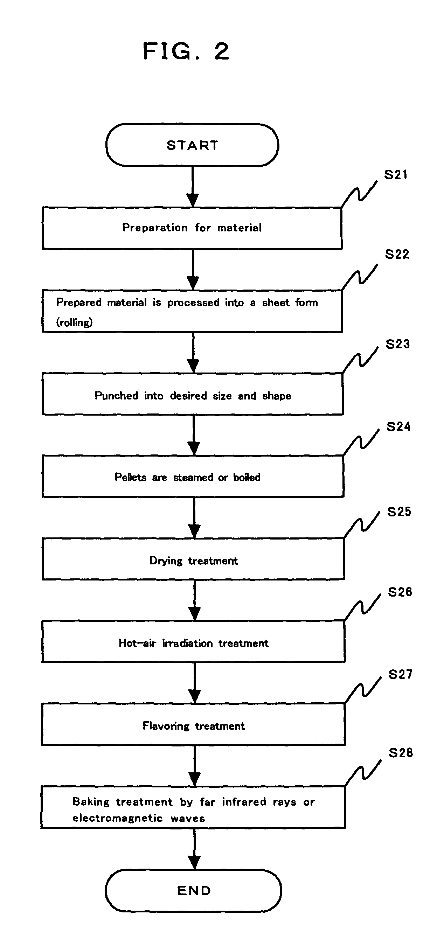

Fig. 2 is a flow chart that indicates a process for manufacturing snacks according to Working Example 2 of the present invention. First of all, as raw material, culinary vegetables, root vegetables, fish and seafood, butchers' meat, and others are crushed and pulverized, and then, wheat flour, rice flour, starches, etc. are added as the secondary material and kneaded together to prepare the material (Step S21).

Then, after molding (rolling) the material prepared in Step S21 into a sheet of a desired thickness by the use of roller press, etc. (Step S22), the sheet is punched into desired shapes, and the material is formed into pellets (Step S23). The pellet referred to here means a material formed into a small piece that measures, for example, 1 to 2 cm square by about 4 mm thick.

Then, after steaming or boiling each pellet thinly cut in Step S2 (Step S24), a drying step is included so that each pellet achieves a desired moisture content (Step S25).

The drying step in Step S25 involves the use of infrared rays or electromagnetic waves so that the pellet moisture content is adjusted to a value in the range from 5-20% as is the case of working example 1, and the pellets can be dried not only in a short time but also homogeneously from the pellet center portion to the end portion. By employing this drying step, crunchiness can be obtained uniformly throughout the whole pellets.

Then, each pellet which is dried to have uniform moisture content in Step 25 is transferred to a hot-air irradiation step by a conveying means such as a belt conveyor, etc. and is irradiated with hot air (Step S26). Hot-air irradiation in this step is carried out by high-temperature hot air irradiated preferably from a plurality of nozzles and is carried out to expand each pellet conveyed. The detail of the hot-air irradiation process will be later described.

The pellet is irradiated with hot air in Step S26 has the moisture present on the relevant pellet surface is dried while at the same time, the moisture contained within the pellet (the fibers and cells when a potato is used for the material) is vaporized to become steam and is swollen (expanded) by the pressure which escapes to the outside (pellet surface direction). In such event a large amount of fibers and cell membranes expanded by the steam remain as air bubbles within the pellet. It is the presence of these air bubbles which means that the original form of snacks equipped with crispy eating sensation can be obtained.

Next, after seasonings such as salt, glutamic acid, various extracts (for example, beef extract), and others are sprayed by a non-oil spray to the pellet expanded (hereinafter called the "snacks") for flavoring (Step S27) same as working example 1, the snacks are baked by the use of infrared rays or electromagnetic waves again (Step S28).

The snacks manufactured as described above go through a screening process (picking process) for equalizing the size and shape variations and are weighed into a volume delivered and packaged into one packing pouch by a weighing process. The snacks divided into weighed volume are delivered into packing pouches, then, packed into carton boxes, and distributed to the market.

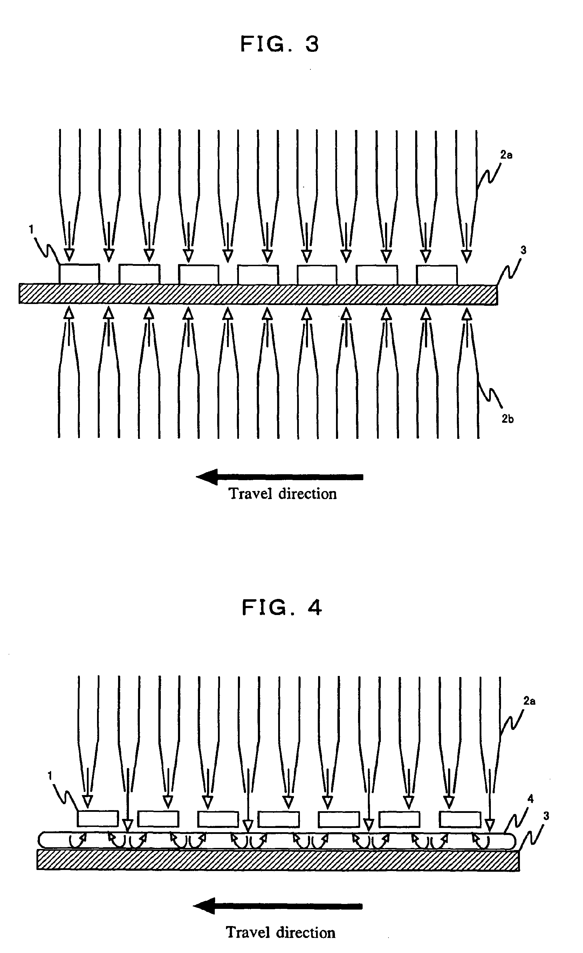

Referring now to Fig. 3 and Fig. 4, the hot air irradiation process will be described in detail. In each of the first and the second embodiments, the hot air irradiation method shown below may be adopted.

In Fig. 3, as the first step of the hot air irradiation step, hot air irradiation nozzles 2a, 2b are installed in the top and bottom directions, respectively, with respect to pellet 1 placed on a belt conveyor 3. For a mechanism for applying this hot air, a plurality of hot air irradiation nozzles are arranged in such a manner that one set of the plurality of hot air irradiation nozzles sprays hot air over the top surface of the relevant belt conveyor 3 for the rolled pellet 1 placed and successively conveyed on the belt conveyor 3 and at the same time the other set of the plurality of hot air irradiation nozzles spray hot air to the bottom surface of the belt conveyor 3. The temperature of hot air irradiated from these hot air irradiation nozzles is adjustable in the range from 80 to 350°C. In addition, the irradiation rate can be adjusted in the range from 5 m to 70 m per second.

Needless to say, the hot air temperature and irradiation rate can be varied as required by the operator in accord with the pellet material, size, etc.

In Fig. 4, as the second method of the hot air irradiation step, hot-air irradiation nozzles 2a for irradiating hot air from the top direction only are installed. For a mechanism for applying this hot air, a plurality of hot air irradiation nozzles are arranged in such a manner that the plurality of hot air irradiation nozzles sprays hot air over the top surface of the relevant belt conveyor 3 for the rolled pellet 1 placed and successively conveyed on the belt conveyor 3. As the hot air irradiated from the hot air irradiation nozzle 2a forms an air bed layer 4 on the belt conveyor 3, pellet 1 is expanded by the hot air irradiated from the hot air irradiation nozzles 2a installed to the top while it is being conveyed successively on the relevant air bed layer 4. As in the case of the first method, the temperature of hot air irradiated from these hot air irradiation nozzles is adjustable in the range from 80 to 350°C, and the irradiation rate can be adjusted in the range from 5 m to 70 m per second.

## Claims

1. A method for manufacturing snacks comprising the steps of:
(a) molding the material into a desired thickness, size, and shape, and
(b) irradiating and the molded material
with hot air.

2. The method according to claim 1 wherein in the irradiating step (b) the material is placed on a specified conveying means and irradiated with hot air.

3. The method according to claim 1 wherein in the molding step (a), the material is molded into the form of pellets and wherein after the molding step and prior to the irradiating step, a rolling step is included.

4. The method according to claim 1 wherein the molding step (a) involves punching the material into a sheet form (plate form) followed by adjusting to a desired thickness and then subsequently converting the sheet-form material into a desired size and a desired shape.

5. The method according to claim 1 wherein in the irradiating step (b), the hot air is irradiated from a plurality of nozzles.

6. The method according to claim 5 wherein the plurality of nozzles are arranged in such a manner that the nozzles can irradiate either the top surface of the specified conveying means or both the top surface and the bottom surface of the specified conveying means with the hot air.

7. The method according to claim 1 wherein prior to the molding step (a), the moisture content of the material is adjusted by subjecting it to the steps of:
(i) steaming or boiling; and
(ii) drying using a infra-red rays or electromagnetic waves.

8. The method according to claim 1 which comprises the further steps of:
(c) flavoring the material which is the product of step (b) with the desired flavors to provide a seasoned material; and
(d) baking the seasoned material.

9. The method according to claim 8, wherein the flavoring step (c) seasons the material produced in step (b) by atomizing seasonings.

10. The method according to claim 1, wherein the material is generated by pulverizing and then kneading any of vegetables, root vegetables, fish and seafood or butchers' meat or combinations of these.
